# EUROPEAN PATENT APPLICATION

(11) **EP 4 501 575 A1**
(43) Date of publication of application: **05.02.2025**
(21) Application number: 23780725.0
(22) Date of filing: 29.03.2023
(51) Int. Cl.: B29C 41/36, B29C 41/24, C08J 5/18

(54) **METHOD FOR PRODUCING CELLULOSE ACYLATE FILM, AND CELLULOSE ACYLATE FILM**

(30) Priority: 30.03.2022 JP 2022056421
(71) Applicant: FUJIFILM Corporation, Tokyo 106-8620 (JP)
(72) Inventor: MIZUSHIMA, Yasuhiro, ashigara-shi, Kanagawa 250-0193 (JP); KATANO, Shogo, ashigara-shi, Kanagawa 250-0193 (JP)
(74) Representative: Hoffmann Eitle
(86) International application number: PCT/JP2023/012879
(87) International publication number: WO 2023/190717

(57) **Abstract**

Provided are a method for producing a cellulose acylate film, which makes it possible to produce a film having a reduced amount of residual solvent and a reduced amount of elution with good productivity even in a case where the film is relatively thick; and a cellulose acylate film.

A cellulose acylate film (23) is produced by a method for producing a cellulose acylate film, the method including a casting step of forming a cast film by casting a dope (14) containing a cellulose acylate (11), a sugar ester derivative, and a polyester having a weight-average molecular weight in a range of 50000 or more and 1000000 or less and represented by a specific formula on a support; and a peeling step of peeling the cast film from the support.

## Description

### BACKGROUND OF THE INVENTION

### 1. Field of the Invention

The present invention relates to a method for producing a cellulose acylate film and a cellulose acylate film.

### 2. Description of the Related Art

A cellulose acylate film, which is typified by a cellulose acetate film, has high transparency and moisture permeability, and is therefore used in a wide range of applications, including optical applications such as films for polarizing plates and applications for displays, as well as agricultural materials such as agricultural greenhouses and food packaging materials.

It is known that a derivative of sugar is used as an additive in the production of a cellulose acylate film (JP2014-081619A and WO2018/003246A). These documents state that a film having high hardness and high durability can be obtained by using a derivative of sugar as an additive.

### SUMMARY OF THE INVENTION

In a case where a film was produced by a solution film formation method using a derivative of sugar as an additive, the amount of residual solvent in the film tended to increase. In order to reduce the amount of residual solvent in the film, it was necessary to take measures such as extending a drying time for drying the solvent, which might lead to a decrease in productivity.

An object of the present invention is to provide a method for producing a cellulose acylate film, which makes it possible to produce a film having a reduced amount of residual solvent and a reduced amount of elution with good productivity even in a case where the film is relatively thick; and a cellulose acylate film.

A method for producing a cellulose acylate film according to an embodiment of the present invention is a method for producing a cellulose acylate film from a dope containing a cellulose acylate, the method including a casting step of forming a cast film by casting the dope containing the cellulose acylate having an acyl group substitution degree in a range of 2.00 or more and 3.00 or less, a sugar ester derivative, and a polyester having a weight-average molecular weight in a range of 50000 or more and 1000000 or less and represented by Formula (1) on a support and a peeling step of peeling the cast film from the support.

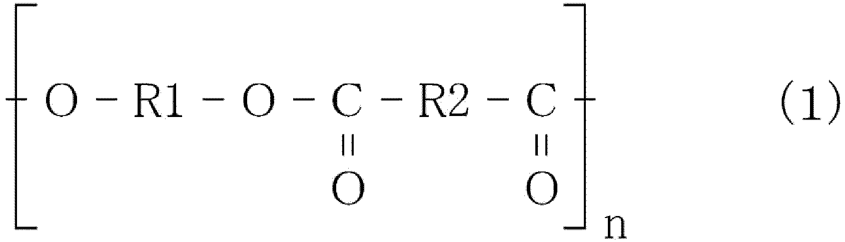

(In Formula (1), R1 and R2 are each an alkyl group and may be the same as or different from each other, and n is an integer of 1 or more.)

It is preferable that the support is a metal drum or a metal band and is provided with a temperature control mechanism, and the temperature control mechanism adjusts temperature of a circumferential surface of the drum or a surface of the band, which is brought into contact with the dope, to a preset constant temperature.

The temperature control mechanism preferably adjusts the temperature of the circumferential surface of the drum or the surface of the band to a preset temperature of 0°C or lower.

The dope preferably contains two or more types of the sugar ester derivatives and contains 2 parts by mass or more of the polyester based on 100 parts by mass of the cellulose acylate.

The method for producing a cellulose acylate film according to the embodiment of the present invention preferably further includes a drying step of drying the cast film by heating and/or blowing air after peeling the cast film from the support in the peeling step.

It is preferable that the cast film is peeled off in the peeling step in a state where the amount of residual solvent in the cast film is in a range of 50% by mass or more and 500% by mass or less based on the entire cast film, and then the cast film is dried in the drying step.

It is preferable to produce a cellulose acylate film having a thickness in a range of 100 µm or more and 500 µm or less.

In addition, a cellulose acylate film according to the embodiment of the present invention contains a cellulose acylate having an acyl group substitution degree in a range of 2.00 or more and 3.00 or less, a sugar ester derivative, and a polyester having a weight-average molecular weight in a range of 50000 or more and 1000000 or less, which is represented by Formula (1).

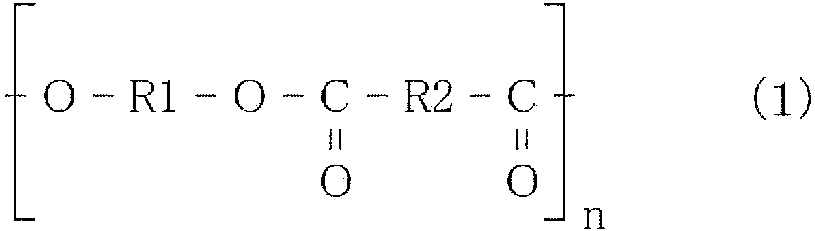

(In Formula (1), R1 and R2 are each an alkyl group and may be the same as or different from each other, and n is an integer of 1 or more.)

The amount of elution in a case of being immersed in a 10% by mass ethanol solution at 40°C for 10 days is preferably 10 mg or less per 50 cm².

In Formula (1), at least one of R1 or R2 is preferably a group obtained by copolymerizing two or more types of aliphatic groups which are different from each other.

The cellulose acylate preferably has an acyl group substitution degree in a range of 2.50 or more and 2.97 or less.

The polyester preferably has Mw/Mn in a range of 3 or more and 30 or less, in a case where a weight-average molecular weight is defined as Mw and a number-average molecular weight is defined as Mn.

The cellulose acylate film according to the embodiment of the present invention preferably contains two or more types of the sugar ester derivatives and contains 2 parts by mass or more of the polyester with respect to 100 parts by mass of the cellulose acylate.

The amount of residual chlorine-based solvent is preferably less than 1% by mass.

The cellulose acylate film according to the embodiment of the present invention preferably has a thickness in a range of 100 µm or more and 500 µm or less.

According to the present invention, it is possible to provide a method for producing a cellulose acylate film, which makes it possible to produce a film having a reduced amount of residual solvent and a reduced amount of elution with good productivity even in a case where the film is relatively thick; and a cellulose acylate film.

### BRIEF DESCRIPTION OF THE DRAWINGS

Fig. 1 is a schematic view of a film production device using a drum.
Fig. 2 is a schematic view of a film production device using a band.

### DESCRIPTION OF THE PREFERRED EMBODIMENTS

An example of a basic configuration of the present invention will be described. The method for producing a cellulose acylate film according to the embodiment of the present invention is a method for producing a cellulose acylate film from a dope containing a cellulose acylate, the method including a casting step of forming a cast film by casting a dope containing a specific compound on a support, and a peeling step of peeling the cast film from the support. The cellulose acylate film according to the embodiment of the present invention is produced by a solution film formation method.

The dope in the casting step contains a cellulose acylate and an additive. The dope contains, as additives, at least a sugar ester derivative and a polyester having a weight-average molecular weight in a range of 50000 or more and 1000000 or less and represented by Formula (1). In Formula (1), R1 and R2 are each an alkyl group and may be the same as or different from each other, and n is an integer of 1 or more. In addition, the terminal of the polyester may be a hydroxyl group and/or an acid group, and the terminal may be sealed with a monocarboxylic acid, a monoalcohol, or the like.

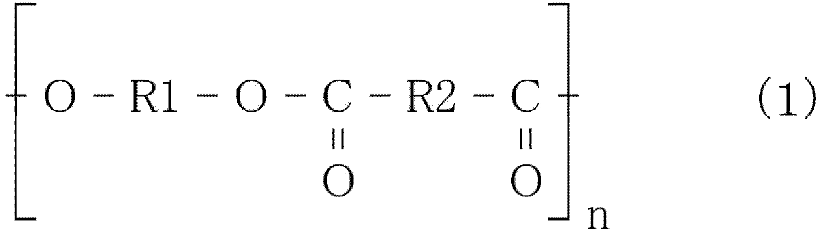

The cellulose acylate preferably has an acyl group substitution degree in a range of 2.00 or more and 3.00 or less. The cellulose acylate more preferably has an acyl group substitution degree in a range of 2.50 or more and 2.97 or less. As the acyl group substitution degree decreases, the haze degree tends to be deteriorated, and the produced cellulose acylate film has high water absorption and low strength. For example, in a case where the produced cellulose acylate film is used in agricultural applications or food packaging applications, the film tends to stretch due to water absorption during use, resulting in deformation and sagging. For this reason, the acyl group substitution degree of the cellulose acylate is set to 2.00 or more. In addition, the upper limit of the acyl group substitution degree is theoretically 3.00, but it is difficult to synthesize a cellulose acylate having an acyl group substitution degree of more than 2.97. For this reason, the acyl group substitution degree of the cellulose acylate is more preferably set to 2.97 or less.

The acyl group substitution degree of the cellulose acylate is more preferably in a range of 2.60 or more and 2.95 or less, and still more preferably in a range of 2.70 or more and 2.95 or less. The acyl group substitution degree can be measured in accordance with ASTM-D817-96, which is a standard established by the American Society for Testing and Materials (ASTM).

The sugar ester derivative is a sugar derivative in which a hydroxyl group other than an anomeric carbon of a sugar forms an ester with an acid, and both an ester derivative of a monosaccharide and an ester derivative of a polysaccharide can be used. The sugar ester derivative may be used in the form of a mixture of two or more types of compounds. Preferably, two types of compounds different from each other are used as the sugar ester derivatives. For example, an ester derivative of sucrose can be used, and two types of compounds of sucrose benzoate and sucrose acetate isobutyrate can be used in admixture.

The content of the sugar ester derivative is preferably in a range of 1 part by mass or more and 15 parts by mass or less with respect to 100 parts by mass of the cellulose acylate. The content of the sugar ester derivative is more preferably in a range of 2 parts by mass or more and 10 parts by mass or less. In a case where the content of the sugar ester derivative is 1 part by mass or more, an effect of improving the hardness, elastic modulus, or durability of the cellulose acylate film can be exhibited, and a synergistic effect with the polyester can be exhibited, such as reducing the amount of residual solvent which is a solvent remaining in the film or reducing the amount of elution of components of the cellulose acylate film that are eluted into moisture or the like. In a case where the content of the sugar ester derivative is 15 parts by mass or less, an effect of improving the hardness and the elastic modulus as well as physical properties such as tear strength can be preferably exhibited by a synergistic effect with the polyester.

The polyester has a weight-average molecular weight Mw in a range of 50000 or more and 1000000 or less and is a polyester represented by Formula (1).

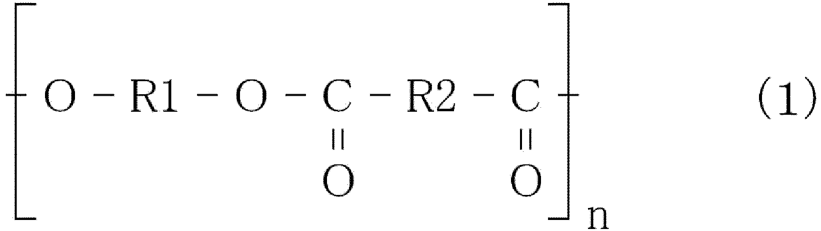

In Formula (1), R1 and R2 are each an alkyl group and may be the same as or different from each other, and n is an integer of 1 or more. R1 is preferably a residue derived from a diol having 2 to 6 carbon atoms and more preferably a residue derived from a diol having 4 to 6 carbon atoms. R2 is preferably a residue derived from a dicarboxylic acid having an aliphatic group having 2 to 6 carbon atoms. Further, it is more preferable that R1 and/or R2 are each two or more types. This makes it possible to adjust a uniform dope without any turbidity, to obtain a film with high transparency and low haze, to appropriately increase the viscosity of the dope at a low temperature, and to appropriately increase the content of the polyester in the dope. Preferably, R1 is a residue of butanediol and R2 is one type of residue of succinic acid or two types of residues of succinic acid and adipic acid. This is polybutylene succinate-co-adipate (PBSA). Therefore, in Formula (1), at least one of R1 or R2 is preferably a residue obtained by copolymerizing two or more types of aliphatic groups which are different from each other. Specifically, polybutylene succinate (PBS) or polybutylene succinate-co-adipate (PBSA) can be used as the polyester.

The polyester has a weight-average molecular weight Mw in a range of 50000 or more and 1000000 or less, preferably a Mw in a range of 60000 or more and 500000 or less, and more preferably a Mw in a range of 90000 or more and 200000 or less. In a case where the Mw is 50000 or more, an effect of reducing the amount of residual solvent, an effect of reducing the amount of elution, and the like can be preferably exhibited. In a case where the Mw is 1000000 or less, the polyester is easily dissolved in a solvent, and a suitable viscosity characteristic as a dope is obtained in a case of being dissolved. By using the polyester having a relatively high molecular weight as described above, an effect of improving the hardness, the tear strength, and the like, and an effect of reducing the amount of residual solvent in the film can be obtained by a synergistic effect with the sugar ester derivative, so that the amount of eluted substances from the film can be reduced.

In addition, the polyester preferably has a dispersity represented by Mw/Mn, which is a ratio of a weight-average molecular weight Mw to a number-average molecular weight Mn, in a range of 3 or more and 30 or less. The dispersity is more preferably in a range of 4 or more and 25 or less and still more preferably in a range of 5 or more and 20 or less. In a case where the dispersity is within this range, the molecular weight distribution is broad, and an effect of reducing the amount of residual solvent can be preferably exhibited. In addition, the haze in a case of being added to the cellulose acylate can be suppressed, and the hardness, the tear strength, and the like can be improved by a synergistic effect with the sugar ester derivative.

The content of the polyester is preferably in a range of 1 part by mass or more and 15 parts by mass or less with respect to 100 parts by mass of the cellulose acylate. The content of the polyester is more preferably in a range of 2 parts by mass or more and 10 parts by mass or less. In a case where the content of the polyester is in a range of 1 part by mass or more and 15 parts by mass or less, an effect of reducing the amount of residual solvent, an effect of reducing the amount of elution, or the like, which is a synergistic effect with the sugar ester derivative, can be preferably exhibited, and a problem that the haze value of the film is increased is unlikely to occur.

The dope may contain other additives in addition to the cellulose acylate and the additives consisting of a sugar ester derivative and a polyester. Examples of the other additives include a plasticizer, a matting agent, an ultraviolet absorber, an ultraviolet stabilizer, an antioxidant, a colorant, a lubricant, and an antistatic agent, each of which can be selected and used depending on the application. Examples of the plasticizer include compounds such as triphenyl phosphate (TPP) and biphenyl diphenyl phosphate (BDP). Examples of the matting agent include silica particles. As the ultraviolet absorber, various types of ultraviolet absorbers used in films can be used, and specifically, a benzotriazole-based ultraviolet absorber and the like can be used.

The other additives can be selected and used in amounts within the range that do not adversely affect the cellulose acylate film. The additives are preferably added in a total amount within a range of 0.001 parts by mass or more and 10 parts by mass or less with respect to 100 parts by mass of the cellulose acylate, in terms of solid content.

In the casting step, the dope is cast onto a support to form a cast film. A drum or a band is used as the support, and the dope is cast onto a circumferential surface of a rotating drum or a surface of a traveling band to form a cast film. At least a circumferential surface of the drum or at least a surface of the band is preferably made of a metal, and the drum or band preferably has a temperature control mechanism for adjusting the temperature of the circumferential surface or the surface to a preset constant temperature. In a case where the support is a drum, the temperature control mechanism can adjust the temperature of the circumferential surface of the drum. In a case where the support is a band, the temperature of the surface of the band can be indirectly adjusted by adjusting a temperature of a circumferential surface of a roller on which the support is allowed to travel.

The solution film formation method is roughly classified into a drying gelation method and a cooling gelation method depending on how the cast film is solidified. In the drying gelation method, the cast film is dried to a desired dryness level, so the cast film is gelled and solidified by this drying. That is, the cast film is dried and solidified to such an extent that the wet film after peeling can be transported. The drying is usually carried out by blowing drying air onto the cast film. In order to solidify the cast film by drying, it takes a longer time than the time required for solidification by the cooling gelation method, so a band is usually used as the support instead of a drum.

On the other hand, the cooling gelation method is a method in which the cast film is actively cooled into a gel in a state where the proportion of the residual volatile matter content which is a residual solvent is extremely high, and the gelation is progressed until the cast film is solidified to such an extent that the cast film can be transported even after being peeled off. This method can solidify the cast film in a shorter time than the drying gelation method, so that a drum can be used as the support.

Either one of a drying gelation method and a cooling gelation method, or a combination of a drying gelation method and a cooling gelation method can be adopted since the cast film can be solidified. In the method for producing a cellulose acylate film according to the embodiment of the present invention, any of a drying gelation method, a cooling gelation method, or a combination thereof can be carried out.

In addition, the present inventors have found that the viscosity of the above-mentioned dope increases especially at a low temperature. The increase in the viscosity of the dope at a low temperature, specifically, the storage elastic modulus of the dope is due to the interaction between the cellulose acylate according to the embodiment of the present invention and the polyester in the dope which is a polymer solution, and the viscosity of the dope can be appropriately adjusted depending on the concentration or temperature of the dope, which has been found to be particularly effective in a case where the temperature of the dope is 0°C or lower. Therefore, in the present embodiment, it is preferable to adopt the cooling gelation method. In addition, according to the combination of the dope of the present invention with the cooling gelation method, even a thick cast film can be quickly and easily gelled, so that a relatively thick cellulose acylate film can be produced. In addition, by carrying out the cooling gelation method using a drum as a support, the cast film can be quickly peeled off and dried from both sides of the film, so that even a thick film can be produced efficiently.

In the peeling step, the solidified cast film is peeled off. After the cast film is solidified to such an extent that the cast film can be peeled off and transported, the cast film is continuously peeled off by a peeling roller or the like. The peeled film is dried and then wound up by a winder to obtain a cellulose acylate film.

The cellulose acylate film obtained in the above manner contains a cellulose acylate having an acyl group substitution degree in a range of 2.00 or more and 3.00 or less, a sugar ester derivative, and a polyester having a weight-average molecular weight in a range of 50000 or more and 1000000 or less and represented by Formula (1). In Formula (1), R1 and R2 are each an alkyl group and may be the same as or different from each other, and n is an integer of 1 or more.

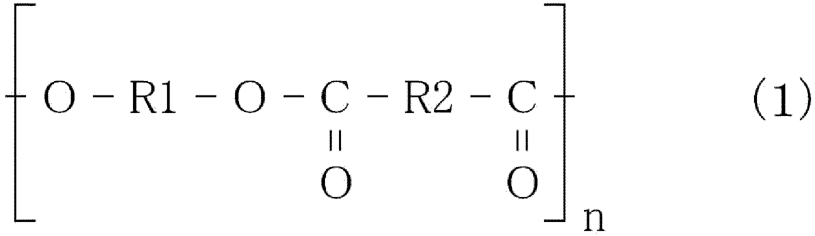

**In** addition, since this cellulose acylate film contains a specific cellulose acylate and a specific additive, the amount of residual solvent can be reduced, and the amount of residual chlorine-based solvent or alcohol can each be reduced to less than 1% by mass based on the entire cellulose acylate film. In particular, even in a case of a cellulose acylate film having a thickness in a range of 100 µm or more and 500 µm or less, the amount of residual chlorine-based solvent or alcohol can each be reduced to less than 1% by mass.

The cellulose acylate film can be used for optical applications or display applications due to its high transparency, as well as for food packaging applications or agricultural applications, taking advantage of its transparency or moisture permeability. **In** these applications, the use of a derivative of sugar as an additive to the cellulose acylate film makes it possible to obtain a film having high hardness and high durability, and the film can be expected to be used as a film suitable for food packaging applications. As described above, a solution film formation method of a cellulose acylate film is known as the method for producing such a cellulose acylate film.

In a case where a derivative of sugar as an additive is added to such a cellulose acylate, there is a problem in that an organic solvent is likely to remain in the film during the solution film formation, which increases the amount of residual solvent in the film, and the drying time needs to be extended to dry the solvent, which slows down the production speed and thus reduces the productivity. In order to accelerate the drying, a method of increasing the amount of the derivative of sugar or adding other additives for accelerating the drying can also be considered, but it is necessary to take into consideration the amount of elution from the film or the like in terms of application to optical applications, food packaging applications, or agricultural applications.

By adding a specific polyester having a high molecular weight, for example, PBS or PBSA, to the cellulose acylate in addition to the sugar ester derivative, it is possible to achieve both imparting of drying properties and low amounts of elution during the solution film formation while maintaining the optical properties of the cellulose acylate and achieving the high hardness and high durability of the cellulose acylate. In addition, this reduces the amount of residual solvent, making it possible to form a film having a low amount of elution in a short drying time.

In addition to the sugar ester derivative, the addition of a specific polyester increases the viscosity of the dope, especially at a low temperature. Therefore, the dope is easily applied to a case of forming a film using a drum that turns the dope into a gel and peels off the dope with a high volatile matter content (amount of residual solvent) during the film formation, which makes it possible to increase an effect of reducing the amount of residual solvent by drying both sides from the high volatile matter content. In particular, in a case of forming a film having a thickness of 200 µm or more, the peeling and the reduction of the amount of residual solvent during the film formation are easy, so that a thick film can be efficiently formed.

The cellulose acylate film obtained is a hard film having a high elastic modulus. In addition, a film having a high elastic modulus and a high tear strength is obtained.

Next, examples of embodiments of the method for producing a cellulose acylate film and the cellulose acylate film according to the embodiment of the present invention will be described.

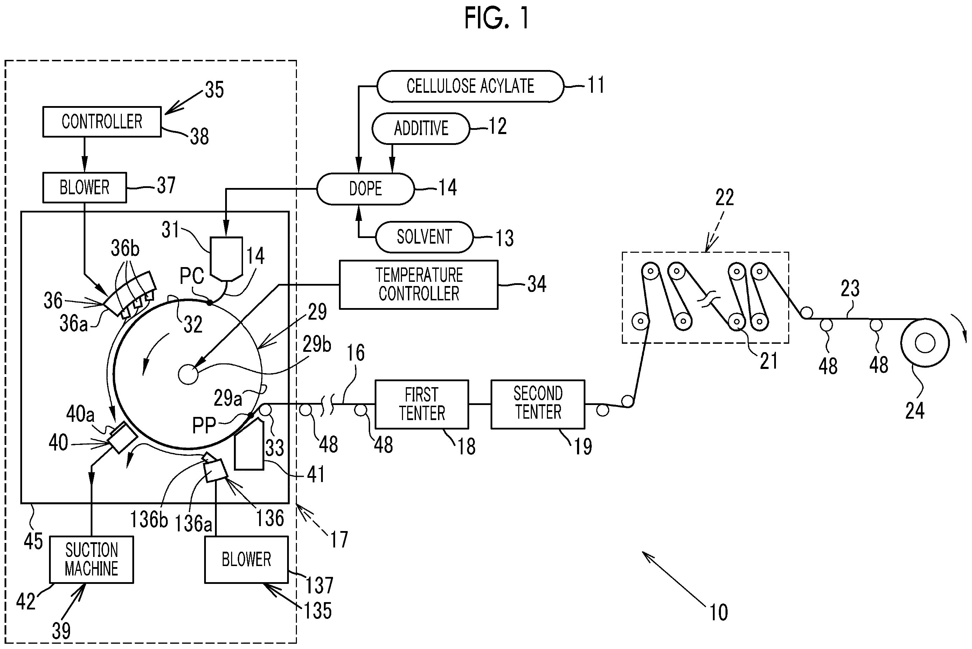

As shown in Fig. 1, a film production device 10 is a device that continuously produces a cellulose acylate film 23 by a solution film formation method and carries out the method for producing a cellulose acylate film according to the embodiment of the present invention. In the present embodiment, a cooling gelation method using a drum as a support is mainly carried out.

The film production device 10 includes a casting unit 17, a first tenter 18, a second tenter 19, a roller dryer 22, and a winder 24. The casting unit 17 is for forming a wet film 16 from a dope 14 in which a cellulose acylate 11 and an additive 12 are dissolved in a solvent 13. The first tenter 18 is for drying the formed wet film until a certain amount of residual solvent is reached while holding each side portion of the film by a holding unit (not shown) and transporting the film. The second tenter 19 is for further drying the wet film 16 while holding each side portion of the film by a holding unit (not shown) and appropriately applying a tension in a width direction. The roller dryer 22 further dries the wet film 16 that has passed through the second tenter 19 while transporting the film with a roller 21, thereby forming a cellulose acylate film 23. The winder 24 is for winding the dried cellulose acylate film 23 into a roll.

The casting unit 17 includes a metal drum 29 as a support, a casting die 31, a first gas supply unit 35, a second gas supply unit 135, and a path control unit 41. The drum 29 has a rotation axis 29b, and the rotation axis 29b is fixed to the center of a circular side surface. The rotation axis 29b is rotated in a circumferential direction by a driving unit (not shown), whereby the drum 29 is rotated in a circumferential direction. By this rotation, a circumferential surface 29a serves as an endless casting surface on which the dope 14 is cast.

The casting die 31 that allows the dope 14 to flow out is provided above the drum 29. As described above, the dope 14 is prepared by mixing the cellulose acylate 11 and the additive 12, which are solid contents, with the solvent 13, which is a liquid content.

An outflow port (not shown) of the casting die 31 from which the dope 14 flows out has a slit shape extending in the longitudinal direction of the rotation axis 29b, and the casting die 31 is disposed such that the outflow port faces the circumferential surface 29a of the drum 29. The dope 14 is cast onto the rotating drum 29 by continuously flowing the dope 14 from the casting die 31 onto the drum 29. This casting results in the formation of a cast film 32 on the circumferential surface 29a of the drum 29 which is a casting surface. The longitudinal direction of the rotation axis 29b is a depth direction of the paper surface in Fig. 1.

The drum 29 has a temperature controller 34 which is a temperature control mechanism for controlling the temperature of the circumferential surface 29a. The temperature of the circumferential surface 29a is controlled by the temperature controller 34, whereby the temperature of the cast film 32 brought into contact with the circumferential surface 29a is controlled.

The temperature controller 34 preferably adjusts the temperature of the circumferential surface 29a of the drum 29 to a preset temperature of 0°C or lower. The gelation of the cast film 32 can be promoted quickly by cooling the circumferential surface 29a. The present inventors have found that, since the dope 14 contains a cellulose acylate, a sugar ester derivative, and a specific polyester, the temperature of the cast film 32 is adjusted in a case where the circumferential surface 29a is cooled, so the viscosity of the dope 14 is increased to a level suitable for peeling off the cast film 32.

In a case of the circumferential surface 29a of the metal drum 29, the cooling temperature of the circumferential surface 29a is preferably in a range of -20°C or higher and 5°C or lower, more preferably in a range of -15°C or higher and 0°C or lower, still more preferably in a range of -10°C or higher and 0°C or lower, and most preferably in a range of -5°C or higher and 0°C or lower. In a case where the circumferential surface 29a is cooled to a temperature lower than -20°C, the cast film 32 may be affected. In a case where the circumferential surface 29a is cooled to a temperature higher than 5°C, an effect of rapid solidification of the cast film 32 may not be obtained. The temperature adjustment of the circumferential surface 29a can be determined depending on various conditions such as the composition or temperature of the dope 14, the thickness of the cast film 32, and the room temperature. In the present embodiment, the temperature controller 34 adjusts the temperature of the circumferential surface 29a to a preset temperature of -5°C.

In a case where the temperature of the circumferential surface 29a is within the above range, the gelation to an extent that allows the peeling and the transport is rapidly carried out in the cast film 32, thereby improving the productivity. In particular, in the cast film 32, the gelation is rapidly carried out to such an extent that the cast film 32 can be peeled off and transported in a state where the proportion of the amount of residual solvent, which is a volatile matter content, is in a range of 50% by mass or more and 500% by mass or less based on the entire cellulose acylate film 23. The amount of residual solvent in this case refers to a total amount of residual solvents, including a chlorine-based solvent, an alcohol-based solvent, and the like. Then, a relatively thick cellulose acylate film having a thickness in a range of 100 µm or more and 500 µm or less can be produced with good productivity. The thickness of the cellulose acylate film can be adjusted by the composition of the dope 14, the rotation speed of the drum 29, the drying conditions, the casting time from a casting position PC to a peeling position PP, or the like.

The amount of residual solvent (unit: %) is a value based on a dry amount, and specifically, in a case where the mass of the cellulose acylate film 23 for which the amount of residual solvent is to be obtained is defined as x, and the mass of the film 23 after being completely dried is defined as y, the amount of residual solvent is a percentage calculated by {(x - y)/y} × 100. It is noted that the phrase "completely dried" does not necessarily mean that the residual amount of the solvent is strictly "0". For example, in the present embodiment, the mass of the cellulose acylate film 23 to be measured after being subjected to a drying treatment for 3 hours or longer in a constant-temperature tank at a temperature of 120°C or higher and a relative humidity of 10% or less is defined as y.

The temperature of the cast film 32 is greatly affected by the temperature of the circumferential surface 29a of the drum 29 brought into contact with the cast film 32. Moreover, since the cast film 32 is thin, the temperature of the cast film 32 is the same as the temperature of the circumferential surface 29a of the drum 29 substantially at the same time as it is formed, and is kept at the temperature of the circumferential surface 29a of the drum 29 until the cast film 32 reaches the peeling position PP. That is, the temperature of the cast film 32 from the casting position PC to the peeling position PP is kept at the same temperature as that of the circumferential surface 29a of the drum 29. Therefore, the temperature of the cast film 32 does not need to be detected by a detection unit, and the set temperature of the circumferential surface 29a of the drum 29 may be regarded as the temperature of the cast film 32.

The first gas supply unit 35 is for supplying a dried gas to the cast film 32. In a case where the gelation is sufficiently advanced by cooling so that the cast film 32 can be peeled off, the drying of the cast film 32 using the dried gas supplied by the first gas supply unit 35 or the second gas supply unit 135 may not be carried out or may be carried out as an auxiliary drying.

The first gas supply unit 35 has a duct 36, a blower 37, and a controller 38. The duct 36 has a duct main body 36a and a plurality of nozzles 36b. The duct main body 36a is shaped to conform to the circumferential surface 29a of the drum 29 so as to cover the passing cast film 32, and is provided to face the circumferential surface 29a of the drum 29.

Each of the nozzles 36b is provided to protrude from the facing surface of the duct main body 36a facing the circumferential surface 29a of the drum 29. Each of the nozzles 36b has a shape extending long in the width direction of the drum 29 that coincides with the longitudinal direction of the rotation axis 29b, that is, in the width direction of the cast film 32, and the plurality of nozzles 36b are slit-shaped and formed to be aligned in the circumferential direction of the drum, and extend downstream in the rotation direction of the drum 29. In this manner, the cast film 32 can be dried by blowing air without adversely affecting the dope 14 or the cast film 32.

The blower 37 supplies a gas to the duct main body 36a. The controller 38 controls the temperature, humidity, and flow rate of the gas sent from the blower 37 to the duct main body 36a. This control adjusts the temperature, humidity, flow rate, and flow velocity of the gas from the nozzle 36b. For example, the gas of the blower 37 is heated by the controller 38, and the heated gas is blown onto the cast film 32 as hot air to dry the cast film 32, particularly the film surface of the cast film 32. The drying of the cast film 32 can also be promoted by cooling the gas of the blower 37 with the controller 38 and blowing the cooled gas onto the cast film 32 as cool air.

A suction unit 39 is for making the gas discharged from the nozzle 36b flow along the transport passage of the cast film 32 reliably. The suction unit 39 includes a duct 40 and a suction machine 42. The duct 40 is disposed downstream of the duct 36 in the rotation direction of the drum 29 and is provided to face the circumferential surface 29a of the drum 29. The duct 40 extends in the width direction of the circumferential surface 29a so as to cover the entire area of the cast film 32 in the width direction. The duct 40 is provided with an opening 40a for sucking the atmosphere above the cast film 32, and the duct 40 is disposed such that the opening 40a faces the upstream side in the rotation direction of the drum 29. The opening 40a has a shape that extends long in the width direction of the circumferential surface 29a. The suction machine 42 sucks a gas, and the atmosphere above the cast film 32 is sucked from the opening 40a by the suction. This allows the gas discharged from the nozzle 36b to flow along the transport passage of the cast film 32 more reliably, so that a dry film is formed on the film surface of the cast film 32 more quickly and more reliably.

The second gas supply unit 135 is operated in a case where the drying of the cast film 32 by the first gas supply unit 35 is insufficient at the peeling position PP. The second gas supply unit 135 is for supplying a gas to the cast film 32 moving toward the peeling position PP in a headwind direction. The second gas supply unit 135 is disposed downstream of the suction unit 39. The second gas supply unit 135 has a duct 136 and a blower 137 having a configuration similar to that of the blower 37. The duct 136 has a duct main body 136a into which a gas from the blower 137 is sent, and a nozzle 136b formed in the duct main body 136a. The nozzle 136b has a configuration similar to that of the nozzle 36b, and the duct 136 is disposed such that an opening at a distal end of the nozzle 136b faces an upstream side in a rotation direction of the drum 29. With this, the second gas supply unit 135 supplies the dried gas to the cast film 32 in a headwind direction. A gas supply unit other than the first gas supply unit and the second gas supply unit may be provided.

The elastic modulus of the cast film 32 increases as gelation proceeds due to cooling or drying. In a case where a gas is supplied to the cast film 32 by the second gas supply unit 135, the duct 40 of the suction unit 39 is disposed downstream of the position where the elastic modulus of the cast film 32 is 50 MPa or more. In a case where the second gas supply unit 135 is operated, the duct 40 of the suction unit 39 is sized to cover the entire area of the passing cast film 32 in the width direction, and therefore acts as a switching unit for switching the wind direction. As a result, at upstream of the duct 40, a tailwind is supplied to the cast film 32 moving toward the peeling position PP, and at downstream of the duct 40, a headwind is supplied to the cast film 32. In this manner, in a case where the elastic modulus of the cast film 32 is 50 MPa or more, it is preferable to switch the direction of the gas supplied to the cast film 32 from a tailwind to a headwind.

The casting unit 17 includes a casting chamber (casing) 45 that surrounds the casting die 31, the drum 29, the duct 36, and the path control unit 41. The blower 37, the controller 38, and the temperature controller 34 are preferably disposed outside the casting chamber 45. The casting chamber 45 includes a supply and exhaust unit (not shown), and the supply and exhaust unit has a gas supply unit (not shown) that supplies a gas to the inside and a discharge unit (not shown) that discharges the gas inside to the outside. With this supply and exhaust unit, the inside of the casting chamber 45 is controlled to have a temperature, a humidity, and a solvent gas concentration in each predetermined range. Although the drying of the cast film 32 also progresses to some extent by this control, the drying is not sufficient, and therefore, it is preferable to use the first gas supply unit 35. The solvent gas is the solvent 13 that has evaporated into a gaseous form.

In a case of peeling, as shown in Fig. 1, the wet film 16 is supported by a roller for peeling (hereinafter, referred to as a peeling roller) 33, and the peeling position PP where the cast film 32 is peeled off from the drum 29 is kept constant.

The path control unit 41 is provided upstream of the peeling roller 33 and is for controlling the path of the wet film 16 moving toward the peeling roller 33. The duct 136 of the second gas supply unit 135 is disposed upstream of the path control unit 41 and is disposed near the downstream side in the rotation direction of the drum 29 so as to be as close as possible to the path control unit 41.

In the peeling step, it is preferable to have a drying step of drying the cast film 32 by heating and/or blowing air after peeling the cast film 32 from the drum 29. The drying step can be carried out by either or both of a tenter consisting of the first tenter 18 and/or the second tenter 19 and the roller dryer 22. The drying is preferably carried out on both sides of the wet film 16.

The wet film 16 formed by peeling is transported by a roller 48 and is guided to the first tenter 18. In the first tenter 18, a side end part of the wet film 16 is held by a holding unit (not shown), and the wet film 16 is dried while being transported by the holding unit. The holding unit is a plurality of pins (not shown). The wet film 16 is held by allowing the pins to penetrate the side end part of the wet film 16. The pins at each side end part move in the transport direction while appropriately applying a tension to the wet film 16 in the width direction.

The second tenter 19 provided downstream of the first tenter 18 is also provided with a plurality of holding units that hold each side end part of the wet film 16. This holding unit is a clip that grips the side end part of the wet film 16. The plurality of clips apply a predetermined tension to the wet film 16 in the width direction at a predetermined timing. The tension in each of the first tenter 18 and the second tenter 19 is set based on the performance or the like of the cellulose acylate film 23 to be produced.

The first tenter 18 and the second tenter 19 each have a chamber (not shown) surrounding the transport passage. Ducts (not shown) are provided inside each chamber of the first tenter 18 and the second tenter 19, and these ducts (not shown) are each provided with a plurality of gas supply nozzles (not shown) and a plurality of suction nozzles (not shown) facing the transport passage of the wet film 16. By sending a dry gas from the gas supply nozzle and suctioning the gas from the suction nozzle, the inside of the chamber of each of the first tenter 18 and the second tenter 19 is maintained at a constant humidity and a constant solvent gas concentration. The wet film 16 is passed through the inside of each chamber of the first tenter 18 and the second tenter 19 to promote drying. In the first tenter 18, the wet film 16 is dried to such an extent that the wet film 16 can be gripped by the clips of the second tenter 19. On the other hand, in the second tenter 19, the degree of dryness to be achieved is determined in consideration of the timing of applying a tension in the width direction.

The wet film 16 that has passed through the second tenter 19 is removed by continuously cutting each side end part, which still has holding marks by the holding units, with a cutting blade in a slitting device (not shown). The central portion between one side end part and the other side end part is sent to the roller dryer 22.

In a case where the wet film 16 is sent to the roller dryer 22, the wet film 16 is supported by the circumferential surfaces of a plurality of rollers 21 arranged side by side in the transport direction. Among these rollers 21, there is a drive roller that is rotated in the circumferential direction, and the wet film 16 is transported by the rotation of the drive roller.

The roller dryer 22 is provided with a duct (not shown) through which the dried gas flows out, and has a chamber (not shown) that separates a space into which a dry gas is fed from the outside. The plurality of rollers 21 are accommodated in the chamber. The chamber of the roller dryer 22 is provided with a gas introduction port (not shown) and an exhaust port (not shown), and the inside of the chamber of the roller dryer 22 is maintained at a constant humidity and a constant solvent gas concentration by supplying a dry gas from the duct and discharging the gas from the exhaust port. By passing the wet film 16 through the inside of the chamber of the roller dryer 22, the wet film 16 is dried into a cellulose acylate film 23.

The cellulose acylate film 23 dried by the roller dryer 22 is removed by continuously cutting each side end part with a cutting blade in a slitting device (not shown). The central portion between one side end part and the other side end part is sent to the winder 24 and is wound into a roll.

In the above, the case where the support is the drum 29 has been described, but the support may be a band.

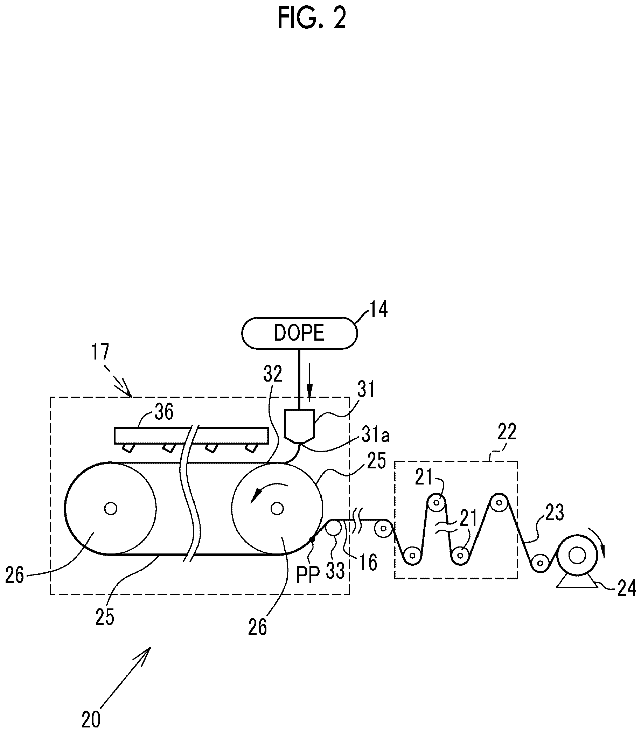

As shown in Fig. 2, a film production device 20 is a device in which the drum 29 serving as a support in the film production device 10 is replaced with a band 25, and the same reference numerals denote the same parts. The film production device 20 includes a casting unit 17, a roller dryer 22, and a winder 24, which are arranged in this order from the upstream side. The casting unit 17 includes a band 25 formed in a circular shape, a pair of rollers 26 that travel in a longitudinal direction in a state of supporting the band 25 on a circumferential surface, a duct 36, a casting die 31, and a peeling roller 33. At least one of the pair of rollers 26 rotates in the circumferential direction, and the band 25 wound around the roller 26 continuously travels in the longitudinal direction by this rotation. In this example, the casting die 31 is disposed above one of the pair of rollers 26, but may be disposed above the band 25 between one of the pair of rollers 26 and the other of the pair of rollers 26.

The band 25 is a support for the cast film 32, and has, for example, a length in a range of 55 m or more and 200 m or less, a width in a range of 1.5 m or more and 5.0 m or less, and a thickness in a range of 1.0 mm or more and 2.0 mm or less.

The casting die 31 allows the supplied dope 14 to flow out continuously from an outflow port 31a facing the band 25. By allowing the dope 14 to continuously flow out onto the band 25 during the traveling, the dope 14 is cast onto the band 25 to form a cast film 32 on the band 25.

The pair of rollers 26 is provided with a temperature controller (not shown) that adjusts the circumferential surface temperature. The temperature of the cast film 32 is adjusted through the band 25 by the roller 26 in which the circumferential surface temperature is adjusted. In a case of a so-called drying gelation method in which the cast film 32 is solidified (gelled) by heating the cast film 32 to promote drying, the circumferential surface temperature of the roller 26 may be, for example, in a range of 15°C or higher and 35°C or lower. In addition, in a case of a so-called cooling gelation method in which the cast film 32 is cooled and solidified, the circumferential surface temperature of the roller 26 may be in a range of -15°C or higher and 5°C or lower. In the present embodiment, the drying gelation method is used.

The duct 36 is for drying the formed cast film 32. The duct 36 is provided to face the band 25. The duct 36 sends a gas to the cast film 32 to promote the drying of the cast film 32. The gas to be sent is temperature-adjusted air, but the gas is not limited to air. The cast film 32 is gelled more quickly by adjusting the circumferential surface temperature of the roller 26 and drying through the duct 36. Then, the cast film 32 is solidified by gelation to a level that allows it to be transported.

Regarding the dope 14 (bead) from the casting die 31 to the band 25, a decompression chamber (not shown) may be provided upstream in the traveling direction of the band 25. This decompression chamber sucks the atmosphere in the area upstream of the outflowing dope 14 to reduce the pressure in this area.

The cast film 32 is solidified on the band 25 to such an extent that the cast film 32 can be transported in the roller dryer 22, and then peeled off from the band 25 in a state of containing the solvent. The peeling roller 33 is for continuously peeling the cast film 32 from the band 25. The peeling roller 33 supports the cellulose acylate film 23 formed by peeling the cast film 32 from the band 25, for example, from below, and keeps the peeling position PP where the cast film 32 is peeled off from the band 25 constant. The peeling method may be any of a method of pulling the cellulose acylate film 23 downstream or a method of rotating the peeling roller 33 in the circumferential direction.

In a case of the drying gelation method, the peeling off of the cast film 32 from the band 25 is preferably carried out while the amount of residual solvent in the cast film 32 is in a range of 3% by mass or more and 100% by mass or less, for example. In a case of the cooling gelation method, the peeling off of the cast film 32 from the band 25 is preferably carried out while the amount of residual solvent in the cast film 32 is in a range of 100% by mass or more and 500% by mass or less based on the entire cast film, for example. In the cooling gelation method using the dope 14, the dope 14 is solidified to such an extent that the peeling, drying, transportation, and the like can be carried out with the amount of residual solvent being as described above, so that the time required for drying the solvent is short.

As described above, the casting unit 17 forms the cast film 32 from the dope 14, and further forms the wet film 16 in which the cast film 32 is peeled off from the band 25. The band 25 travels in a circulation manner, so that the casting of the dope 14 and the peeling off of the cast film 32 are repeatedly carried out.

The same as described above applies to the roller dryer 22 and the winder 24. The wet film 16 is dried by the roller dryer 22 to form the cellulose acylate film 23. In the film production device 20 as well, a tenter (not shown) that stretches the wet film 16 in the width direction may be provided between the casting unit 17 and the roller dryer 22. In addition, a slitter (not shown) may be provided between the roller dryer 22 and the winder 24, for example, and each side portion of the cellulose acylate film 23 may be cut off continuously by this slitter.

The thickness of the cellulose acylate film 23 that is completed and wound up on the winder 24 can be set within a range of 10 µm or more and 500 µm or less. Due to the synergistic effect of the cellulose acylate according to the embodiment of the present invention, the sugar ester derivative, and the polyester, in particular, it is possible to make the thickness relatively thick, preferably within a range of 100 µm or more and 500 µm or less. That is, the method for producing the cellulose acylate film 23 according to the embodiment of the present invention is preferably a production method for producing a cellulose acylate film having a thickness in a range of 100 µm or more and 500 µm or less. In a case where a thick film is produced, the thickness is more preferably in a range of 120 µm or more and 400 µm or less, and still more preferably in a range of 120 µm or more and 350 µm or less. In the present invention, due to an effect of increasing the viscosity of the dope during cooling, a thick film can be preferably produced particularly in a casting film formation method in which the support is cooled to 0°C or lower.

In addition to the film formation of the cellulose acylate film according to the embodiment of the present invention, it is also preferable to appropriately carry out a film treatment step such as saponification or coating. The saponification treatment may be, for example, a treatment in which the surface of the cellulose acylate film is brought into contact with an aqueous alkali solution of sodium hydroxide and/or potassium hydroxide, or an aqueous solution containing an organic solvent, by immersion or coating.

The cellulose acylate film 23 according to the embodiment of the present invention contains a cellulose acylate having an acyl group substitution degree in a range of 2.00 or more and 3.00 or less, a sugar ester derivative, and a polyester having a weight-average molecular weight in a range of 50000 or more and 1000000 or less and represented by Formula (1). In Formula (1), R1 and R2 are each an alkyl group and may be the same as or different from each other, and n is an integer of 1 or more.

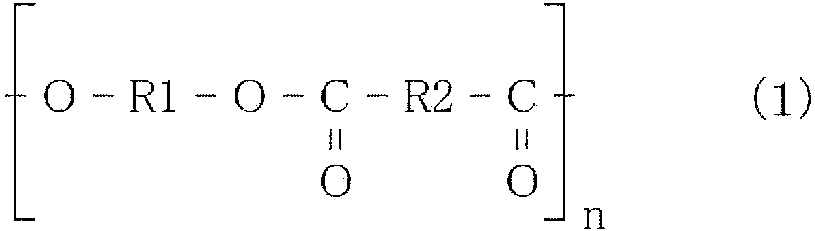

The acyl group of the cellulose acylate constituting the cellulose acylate film 23 is not particularly limited, and may be an acetyl group having one carbon atom, or may be an acyl group having two or more carbon atoms. The acyl group having two or more carbon atoms may be an aliphatic group or an aryl group, and examples thereof include an alkylcarbonyl ester of cellulose, an alkenylcarbonyl ester of cellulose, an aromatic carbonyl ester of cellulose, and an aromatic alkylcarbonyl ester of cellulose, each of which may further have a substituent. Examples of the substituent include a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an iso-butanoyl group, a t-butanoyl group, a cyclohexanecarbonyl group, an oleoyl group, a benzoyl group, a naphthylcarbonyl group, and a cinnamoyl group.

The acyl group of the cellulose acylate constituting the cellulose acylate film 23 may be of only one type or of two or more types where at least one type is preferably an acetyl group. Since the cellulose acylate is a cellulose acylate having an acetyl group, the cellulose acylate film 23 easily absorbs moisture and therefore, for example, an effect of suppressing condensation is further improved. Most preferably, the cellulose acylate is triacetyl cellulose (TAC), in which all of the acyl groups are acetyl groups.

The acyl group substitution degree can be obtained by a conventional method. For example, the acyl group substitution degree can also be measured by measuring a distribution of an acylation degree (acyl group substitution degree) by high performance liquid chromatography in addition to the above-described method in accordance with ASTM: D-817-91. As an example of this method, the measurement of an acetylation degree of cellulose acetate is carried out in such a manner that a sample is dissolved in methylene chloride, and using a column Nova-Pak (registered trademark) phenyl (manufactured by Waters Corporation), a distribution of an acetylation degree is measured by a linear gradient from a mixed liquid of methanol and water (mass ratio of methanol:water is 8:1) as an eluent to a mixed liquid of dichloromethane and methanol (mass ratio of dichloromethane: methanol is 9:1) as an eluent, and the measured value is compared with a calibration curve obtained from a standard sample having a different acetylation degree. These measuring methods can be obtained with reference to the methods disclosed in JP2003-201301A. In a case where a sample cellulose acylate is taken from the cellulose acylate film 23, the acetylation degree of cellulose acylate is preferably measured by high performance liquid chromatography since additives are contained in the cellulose acylate film 23.

The sugar ester derivative may be either an ester derivative of a monosaccharide or an ester derivative of a polysaccharide, and the cellulose acylate film 23 may contain both of these or two or more types of ester derivatives of monosaccharides or two or more types of ester derivatives of polysaccharides.

The sugar may be a monosaccharide such as glucose, galactose, mannose, fructose, xylose, or arabinose, or a polysaccharide such as lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, or galactosyl sucrose. The sugar is preferably glucose, fructose, sucrose, kestose, nystose, 1F-fructosyl nystose, stachyose, or the like, and more preferably sucrose or glucose.

In addition, an oligosaccharide can also be used as the polysaccharide, and the oligosaccharide is produced by allowing an enzyme such as amylase to act on starch, sucrose, or the like. Examples of the oligosaccharide include a maltooligosaccharide, an isomaltooligosaccharide, a fructooligosaccharide, a galactooligosaccharide, and a xylooligosaccharide.

The monocarboxylic acid which is used for esterifying all or a part of the hydroxyl groups in the monosaccharide or polysaccharide structure is not particularly limited, and a known aliphatic monocarboxylic acid, alicyclic monocarboxylic acid, aromatic monocarboxylic acid, or the like can be used. The carboxylic acid used may be one type or two or more types.

Preferred examples of the aliphatic monocarboxylic acid include a saturated fatty acid such as acetic acid, propionic acid, butyric acid, isobutyric acid, valeric acid, caproic acid, enanthic acid, caprylic acid, pelargonic acid, capric acid, 2-ethyl-hexane carboxylic acid, undecyl acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, heptacosanoic acid, montanic acid, melissic acid, or lacceric acid; an unsaturated fatty acid such as undecylenic acid, oleic acid, sorbic acid, linoleic acid, linolenic acid, arachidonic acid, or octenoic acid; and an alicyclic monocarboxylic acid such as cyclopentanecarboxylic acid, cyclohexanecarboxylic acid, or cyclooctanecarboxylic acid.

Preferred examples of the aromatic monocarboxylic acid include an aromatic monocarboxylic acid such as benzoic acid or toluic acid in which an alkyl group or an alkoxy group is introduced into a benzene ring of benzoic acid; an aromatic monocarboxylic acid such as cinnamic acid, benzilic acid, biphenylcarboxylic acid, naphthalenecarboxylic acid, or tetralin carboxylic acid which has two or more benzene rings; and derivatives thereof, among which benzoic acid or a naphthylic acid is particularly preferable.

Therefore, an ester derivative of sucrose, more specifically, sucrose benzoate (SB), sucrose acetate isobutyrate (SAIB), or the like can be preferably used as the sugar ester derivative. Specifically, the ester derivatives of sucrose that can be used are those represented by Formula (2). In Formula (2), in a case of sucrose benzoate, R is benzoyl or H, and the average degree of substitution is 5.7. In addition, in Formula (2), in a case of sucrose acetate isobutyrate, R is acetyl and isobutyryl, and the ratio of the two, acetyl/isobutyryl, is 2/6.

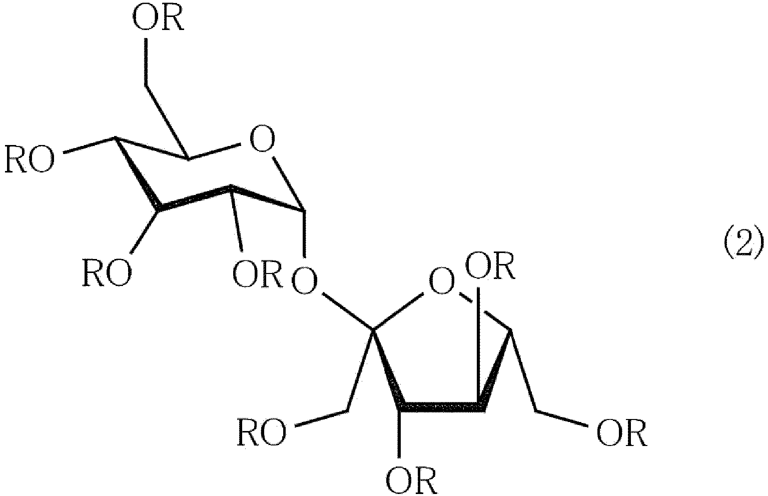

As a commercially available product of the ester derivative of sucrose, "MONOPET (registered trademark) SB" (manufactured by DKS Co., Ltd.) can be used in the case of sucrose benzoate.

The safety of each sugar ester derivative is described in the following documents. That is, reference can be made to Journal of Synthetic Organic Chemistry, Vol. 21 (1963) No. 1, P-19-27, the catalog of DKS Co., Ltd., or JP2011-237764A. The catalog of DKS Co., Ltd. describes fatty acid esters and benzoic acid esters of sugars. The safety includes not only the safety of the above-mentioned substance itself but also the safety of the decomposition products of the above-mentioned substance.

As described above, in the present embodiment, two types of compounds, sucrose benzoate and sucrose acetate isobutyrate, are used, which are sugar ester derivatives represented by Formula (2).

The polyester having a weight-average molecular weight in a range of 50000 or more and 1000000 or less and represented by Formula (1) is as described above, and specifically, is as follows.

That is, in Formula (1), R1 and R2 are both alkyl groups, n is an integer of 1 or more, and R1 is preferably a residue derived from a diol having 2 to 6 carbon atoms. In addition, in General Formula (1), R2 is preferably a residue derived from a dicarboxylic acid having an aliphatic group having 2 to 6 carbon atoms. Further, in General Formula (1), it is more preferable that R1 and/or R2 are each two or more types.

The diol having 2 to 6 carbon atoms, which forms R1, is not particularly limited, and examples thereof include ethanediol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 1,6-hexanediol, and 1,2-hexanediol, among which 1,4-butanediol is preferable. In a case where there are two or more types of R1, the diol having 2 to 6 carbon atoms, to which R1 is given, is preferably 1,4-butanediol or ethanediol.

In addition, the dicarboxylic acid having an aliphatic group having 2 to 6 carbon atoms, which forms R2, is not particularly limited, and examples thereof include succinic acid, glutaric acid, adipic acid, suberic acid, cyclohexanedicarboxylic acid, maleic acid, and fumaric acid, among which succinic acid or adipic acid is preferable. In a case where there are two or more types of R2, the dicarboxylic acid having an aliphatic group having 2 to 6 carbon atoms, to which R2 is given, is preferably succinic acid or adipic acid.

Specific examples of the polyester contained in the cellulose acylate film 23 will be described with reference to Table 1.

**[Table 1]**

| | Molecular weight Mn | Molecular weight Mw | Dispersity Mw/Mn | R1 | R2 | | | |
|---|---|---|---|---|---|---|---|---|
| | | | | | First component | Proportion | Second component | Proportion |
| Additive A | 8420 | 101000 | 12.0 | C₄H₈ | C₂H₄ | 100% | - | - |
| Additive B | 7810 | 145000 | 18.5 | C₄H₈ | C₂H₄ | 75% | C₄H₈ | 25% |
| Additive C | 5900 | 62000 | 10.5 | C₄H₈ | C₂H₄ | 75% | C₄H₈ | 25% |
| Additive D | 1400 | 2800 | 2.0 | C₂H₄ | C₄H₈ | 100% | - | - |

In the present embodiment, the additive A, B, or C shown in Table 1 is used as the polyester contained in the cellulose acylate film 23. The additive A is PBS and is FZ71 manufactured by Mitsubishi Chemical Corporation, and the additive B is PBSA and is FZ92 manufactured by Mitsubishi Chemical Corporation. The additive C is PBSA, which is synthesized by polycondensation of an ester. The values of the number-average molecular weight (Mn), the weight-average molecular weight (Mw), and the dispersity (Mw/Mn) of each of the additives A to C, each component of R1 and R2, and the ratio of the two components in a case where R2 consists of two components are as shown in Table 1. In the present embodiment, R2 consists of a copolymer using succinic acid and adipic acid.

The molecular weight (Mw or Mn) was determined by gel permeation chromatography (GPC). In addition, the additive D is polyethylene adipate (PEA), is a comparative example used for comparison with the additives A to C, and has a weight-average molecular weight (Mw) of less than 50000. Also for this additive D, the values of the number-average molecular weight (Mn), the weight-average molecular weight (Mw), and the dispersity (Mw/Mn), and each component of R1 and R2 are as shown in Table 1.

In addition, as described above, the cellulose acylate film 23 may contain other additives in addition to the cellulose acylate and the additives consisting of a sugar ester derivative and a polyester. In the present embodiment, an ultraviolet absorber is added, and specifically, a compound represented by Formula (3) is used.

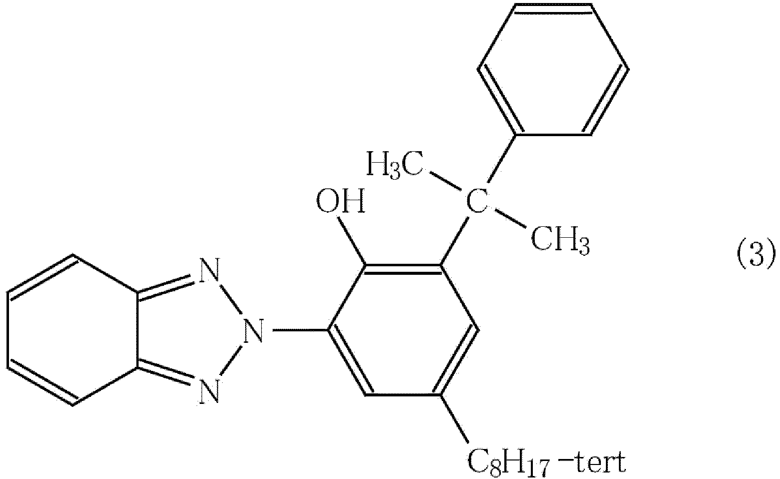

The additives contained in the cellulose acylate film 23, including the compound represented by Formula (3), are the additives mixed in the dope 14.

Since the cellulose acylate film 23 has the above-described configuration, the amount of residual solvent is kept low. The amount of residual solvent refers to a proportion of the solvent contained in the dope 14, which remains in the produced cellulose acylate film 23. Examples of the solvent include methylene chloride and alcohols.

Such a cellulose acylate film 23 can be produced with good productivity in a relatively short time. The reason for this is that the gelation of the cellulose acylate film 23 proceeds in a relatively short time, for example, by using the drum 29 of which the temperature is adjusted, thereby shortening the time from the casting of the dope 14 to the peeling off of the wet film 16, and the peeled wet film 16 can be dried from both sides, thereby ensuring sufficient drying and shortening the time until the wet film 16 is finally formed into the cellulose acylate film 23.

In addition, the cellulose acylate film 23 has a low amount of elution due to having the above-described configuration. The amount of elution is an amount of components of the cellulose acylate film 23 eluted into moisture or the like. The cellulose acylate film 23 can have an amount of elution of 10 mg or less per 50 cm² of the cellulose acylate film 23 in a case of being immersed in a 10% by mass ethanol solution at 40°C for 10 days.

The amount of elution can be measured in a food contact material test or the like. Specifically, the food contact material test can employ the measurement of an amount of migration in food contact materials in EU during long-term storage at room temperature or below room temperature (OM2 conditions). In accordance with this measurement of an amount of migration, the cellulose acylate film 23 is cut into a size of 50 cm², and the entire surface of the film is immersed in 100 mL of a liquid containing 90% of water and 10% of ethanol in a volume ratio at 40°C for 10 days and allowed to stand. Thereafter, the film sample is taken out, the residual liquid is dried at 105°C, and the weight of the remaining components is measured as the amount of elution. The cellulose acylate film 23 preferably has an amount of elution of 10 mg or less and more preferably 5 mg or less.

The film according to the embodiment of the present invention is also preferably provided with a saponified layer on the surface thereof by a saponification treatment. This is because, in agricultural applications, high transparency is provided even in a case of being used in an environment where condensation is likely to occur. This is because, in optical applications, the adhesiveness at the time of lamination is good in a case of being laminated with other films. The saponified layer is a layer formed on the surface of the cellulose acylate film by a saponification treatment, and is formed containing a saponified cellulose acylate and/or a cellulose layer. The thickness of the saponified layer can be determined by an ATR method of FT-IR or by a method in which the cellulose acylate film is dissolved in methylene chloride and/or chloroform.

In addition, the cellulose acylate film 23 has a high elastic modulus and a high tear strength. Further, the cellulose acylate film 23 has a low haze degree and high transparency. Therefore, the cellulose acylate film 23 is suitable for optical applications, food packaging applications such as food contact materials, or agricultural applications. Further, since a film of a thick material with excellent optical properties can be produced with good productivity, a film for optical applications, such as goggles, sunglasses, and polarized sunglasses, which has hitherto been made up of two or more laminated layers, can be changed to a single layer of a thick material of the cellulose acylate film 23. In this manner, the present invention is suitable for a variety of applications.

Hereinafter, examples of the present invention will be described.

### [Examples 1 to 15 and Examples 21 and 22]

Using the film production device 10 shown in Fig. 1, the cellulose acylate film 23 was produced from the dope 14 having the following formulation. In this regard, in the present example, including comparative examples, the second tenter 19 and the second gas supply unit 135 disposed in the film production device 10 were not used, and the drying step was carried out by the roller dryer 22. The temperature of the cast dope 14 (the dope 14 at the time of flowing out from the casting die 31) was adjusted to 35°C. The circumferential surface temperature (°C) of the drum 29 was adjusted by the temperature controller 34 as shown in Table 2.

### <Formulation of dope 14>

Solid components: The concentration of solid contents in the dope 14 is 19.5% by mass.

Solvent: A mixture of dichloromethane and alcohol (methanol and 1-butanol in a mixed ratio of 18:1), with a volume ratio of dichloromethane:alcohol = 81:19

The solid components are cellulose acylate 11, and a sugar ester derivative, a polyester and an ultraviolet absorber which are additives. Cellulose acylates each having the acyl group substitution degree (referred to as "acylation degree" in Table 2) shown in the column of "CA" in Table 2 were used as the cellulose acylate 11. The acyl group substitution degree is a value measured by high performance liquid chromatography.

The sugar ester derivatives used in all examples were sucrose benzoate (SB) and sucrose acetate isobutyrate (SAIB) in a ratio of 3:1. The total amounts of SB and SAID are each shown in the column of "Parts by mass" under "Sugar ester" in Table 2.

For the polyester, the additive A, the additive B, or the additive C shown in Table 1 was used in an amount shown in the column of "Parts by mass" under "PE" in Table 2. In addition, the ultraviolet absorber used was the compound represented by Formula (3) above in a proportion of 2.0 parts by mass.

The production conditions were as shown in Table 2. The drum 29 having a diameter of 3.5 m was used, and the drum 29 was rotated such that the moving speed of the circumferential surface 29a was 1.3 m/s. The temperature of the dried gas flowing out from the nozzle 36b was set to 40°C. The residual percentage of the solvent in the cast film 32 in which the gas was started to be supplied from the first gas supply unit 35 was set to 320% by mass.

In Table 2, "Thickness" indicates the thickness of the finally obtained cellulose acylate film 23, and "Support" indicates that the metal drum 29 was used in all of Examples as shown in Table 2. The temperature of the circumferential surface 29a of the drum 29 was adjusted by the temperature controller 34 to the temperature shown in the column of "Temperature" of Table 2. "Drying time" and "Drying temperature" in Table 2 are the time and the temperature in a case where the wet film 16 was dried in the roller dryer 22. The drying time was adjusted by adjusting the drying length of the roller dryer 22 and the moving speed of the cellulose acylate film within the roller dryer 22.

### [Examples 16 to 20]

A cellulose acylate film 23 was produced in the same manner as in the cases of Examples 1 to 16, except that the film production device 20 shown in Fig. 2 was used, and the band 25 was used instead of the drum 29.

The production conditions were as shown in Table 2. The surface of the roller 26 was adjusted by a temperature controller. The temperature of the dried gas flowing out from the nozzle 36b was set to 40°C. The residual percentage of the solvent in the cast film 32 in which the gas was started to be supplied from the first gas supply unit 35 was set to 320% by mass.

Table 2 shows the evaluation results for the cellulose acylate film 23 obtained in each of Examples. The haze degree, the amount of residual solvent, the amount of elution, the elastic modulus, and the tear strength were evaluated according to the following methods and standards.

### <Haze degree>

The haze degree of the produced cellulose acylate film 23 was measured using a haze meter (NDH5000, manufactured by Nippon Denshoku Industries Co., Ltd.).

### <Amount of residual solvent>

The amount of methylene chloride, which is a solvent, remaining in the produced cellulose acylate film 23 was measured as follows. A film piece as a sample for measurement was dissolved in chloroform to a concentration of about 0.9%, and the amount of methylene chloride in the sample for measurement was measured by gas chromatography using a calibration curve method. The device used was a gas chromatograph GC-2014 (manufactured by Shimadzu Corporation), and the separation column used was an INTER CAP1 (length: 30 m, inner diameter: 0.32 mm, manufactured by GL Sciences, Inc.). The amount of methylene chloride in the sample for measurement/the concentration of the film piece in the sample for measurement was obtained in terms of a percentage. Therefore, the obtained amount of methylene chloride is a mass percentage of the amount of methylene chloride with respect to the entire cellulose acylate film 23, and is shown as the measurement result in the column of "Methylene chloride" in Table 2 in units of % by mass. In addition, methanol and 1-butanol, which are film formation solvents, were measured using the same measuring method. The amounts of these residual solvents are collectively regarded as alcohols, and the measurement results are shown in the column of "Alcohols" in Table 2. As for methylene chloride as a chlorine-based solvent, the residual amount of 1% by mass or less was deemed as acceptable. Similarly, as for alcohols, the residual amount of 1% by mass or less was deemed as acceptable.

### <Amount of elution>

The amount of elution was measured in accordance with the measurement of an amount of migration in food contact materials in EU during long-term storage at room temperature or below room temperature (OM2 conditions). Specifically, the film was cut into a size of 50 cm², and the entire surface of the film was immersed in 100 mL of a liquid containing 90% of water and 10% of ethanol in a volume ratio at 40°C for 10 days and allowed to stand. Thereafter, the film sample was taken out, the residual liquid was dried at 105°C, and the weight of the remaining components was measured as the amount of elution. The acceptable range for the amount of elution is 10 mg or less, and the more preferable range is 5 mg or less.

### <Elastic modulus>

As the elastic modulus of the produced cellulose acylate film 23, a tensile modulus was measured. The tensile modulus is a value measured under the following conditions in accordance with Japanese Industrial Standards JIS K7161:2014. That is, a total of 8 test pieces each having a length of 150 mm and a width of 15 mm were prepared from the cellulose acylate film 23 by changing the cutting direction in the measurement direction by 45° each time, and each test piece was conditioned and stretched at a chuck-to-chuck length of 100 mm and a tensile rate of 200 mm/min under a test atmosphere with a temperature of 25°C and an RH of 60%. The strains at elongations of 0.1% and 0.5% were measured, and the elastic moduli were calculated from the slope of the two points of the strain. The value obtained by averaging the calculated values was taken as the elastic modulus, which was listed in the column of "Elastic modulus" in Table 2 in units of GPa. The measuring machine used was a tensile tester (manufactured by A&D Company, Limited). The value of 3.5 GPa or more for the elastic modulus was deemed as acceptable.

### <Tear strength>

The tear strength of the produced cellulose acylate film 23 was obtained by the Elmendorf method, and was measured using an Elmendorf tear tester (digital type, manufactured by Toyo Seiki Seisaku-sho, Ltd.). Specifically, a sample having a size of 76 mm × 63 mm cut out from the cellulose acylate film 23 was set on a sample stand of the Elmendorf tear tester, with a long side of the sample being laid horizontally, and an incision of 2 cm was made in the sample at a test point. Then, the tear strength was measured at a load of 16 N and a pendulum angle of 70 degrees. The measured value is a value obtained by converting an actual measured value into a value of 100 µm/film thickness (µm) so that the measured value corresponds to 100 µm as the thickness of the film. The measurement results are shown in Table 2 in units of mN. In Table 2, "-" is given to the items for which the target compound was not added, or which were not measured or could not be measured.

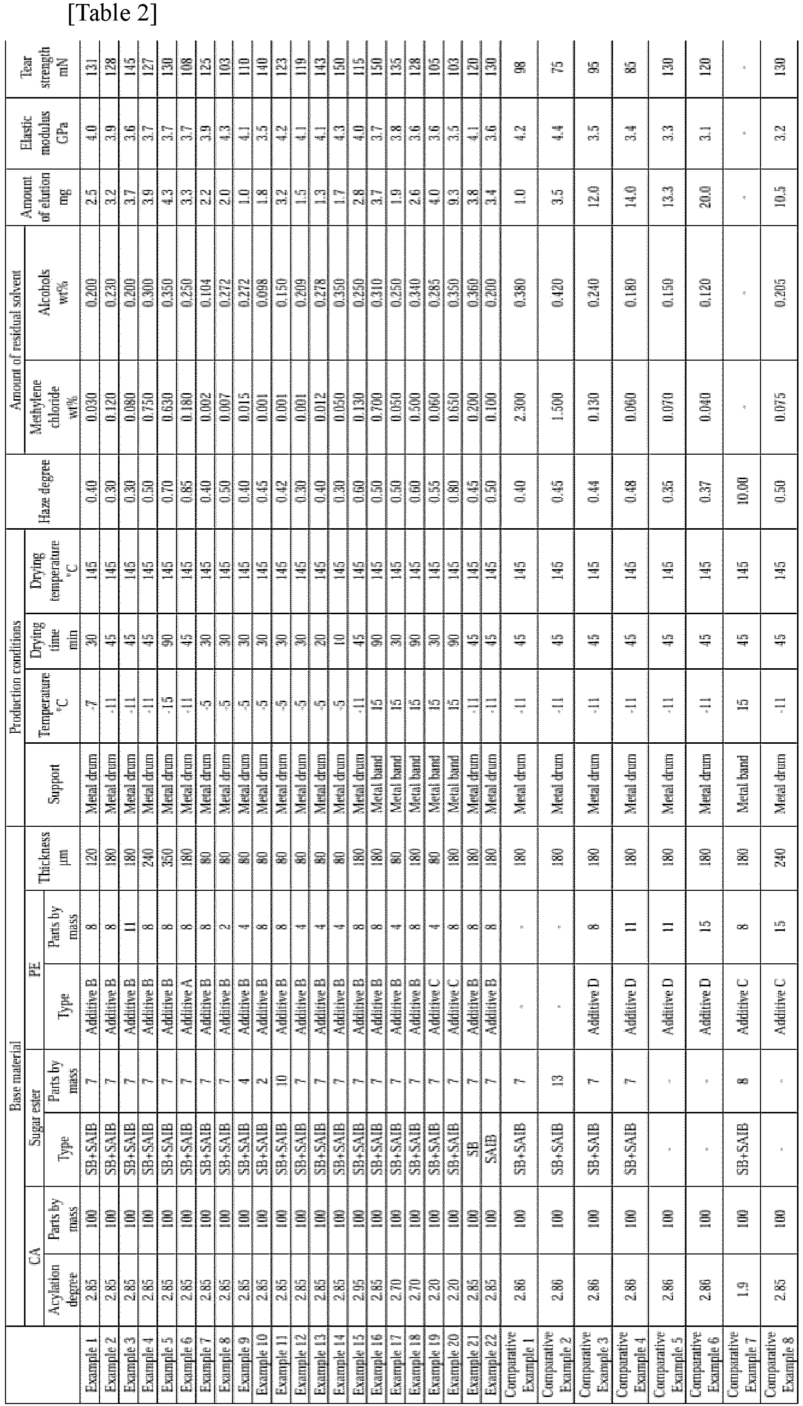

### [Comparative Examples 1 to 8]

A cellulose acylate film 23 was produced under the production conditions shown in Table 2. In each of Comparative Examples 1 to 6 and 8, the cellulose acylate film 23 was produced by the film production device 10 using the drum 29 as the support. In Comparative Example 7, the cellulose acylate film 23 was produced by the film production device 20 using the band 25 as the support. In Comparative Examples 1 and 2, the dope 14 having the above-described formulation did not contain a polyester. In Comparative Examples 3 and 4, the polyester of the additive was the additive D shown in Table 1. In Comparative Examples 5 and 6, the polyester of the additive was the additive D shown in Table 1, and the sugar ester derivative was not contained. In Comparative Example 7, the acyl group substitution degree of cellulose acylate was set to 1.9. In Comparative Example 8, the polyester of the additive was the additive C shown in Table 1, and the sugar ester derivative was not contained. Other than the above, the cellulose acylate film 23 was produced in the same manner as in Examples. The evaluation method was also carried out in the same manner as in Examples. The production conditions and evaluation results are shown in Table 2.

### [Example 23 and Comparative Example 9]

As Example 23, the dope used in Example 1 was measured for shear viscosity at 25°C and storage elastic modulus G' at each of 10°C, 6°C, 2°C, -2°C, -5°C, and -10°C by the following method. In addition, as Comparative Example 9, the dope used in Comparative Example 1 was similarly measured for shear viscosity at 25°C and storage elastic modulus G' at each of 10°C, 6°C, 2°C, -2°C, -5°C, and -10°C, and it was confirmed that the addition of a specific polyester as an additive increased the viscosity of the dope during cooling, particularly at around -2°C, which resulted in an improvement in the drum film formation suitability (cooling suitability or stripping suitability). The measurement results are shown in Table 3.

In Table 3, the composition of each dope is shown in the column of "Cellulose acylate dope". The column of "Concentration of solid contents" indicates the proportion of the solid contents based on the entire dope, in units of % by mass for the solid contents in the dope including cellulose acylate, and additives including a sugar ester derivative, a polyester, and an ultraviolet absorber. In the column of "CA (TAC)", the proportion of cellulose acylate is shown in units of parts by mass. Similarly, the column of "Sugar ester" indicates the proportion of the sugar ester derivative, the column of "PE" indicates the proportion of the polyester, and the column of "UV agent" indicates the proportion of the ultraviolet absorber, all of which are shown in units of parts by mass. In the column of "Remarks", it is stated whether the dope is the same as any of the dopes shown in Table 2.

In addition, in Table 3, the column of "Shear viscosity" shows the value of the shear viscosity measured by a viscoelasticity measuring device (model: MCR-300, manufactured by Physica GmbH). In addition, the column of "Storage elastic modulus G‴ shows the value of the storage elastic modulus measured by a viscoelasticity measuring device (model: MCR-300, manufactured by Physica GmbH).

**[Table 3]**

| | Cellulose acylate dope | | | | | | Shear viscosity (Pa) | Storage elastic modulus G' (Pa·s) | | | | | |
|---|---|---|---|---|---|---|---|---|---|---|---|---|---|
| | Concentration of solid contents % | CA (TAC) Parts by mass | Sugar ester Parts by mass | PE Parts by mass | UV agent Parts by mass | Remarks | 25°C | 10°C | 6°C | 2°C | -2°C | -5°C | -10°C |
| Comparative Example 9 | 19.5 | 100 | 7 | - | 2 | [Table 2] Comparative Example 1 dope | 50 | 221 | 314 | 410 | 528 | 3517 | 18659 |
| Example 23 | 19.5 | 100 | 7 | 8 | 2 | [Table 2] Example 1 dope | 51 | 210 | 295 | 520 | 2520 | 10706 | 25901 |

### Explanation of References

10, 20: film production device
11: cellulose acylate
12: additive
13: solvent
14: dope
16: wet film
17: casting unit
18: first tenter
19: second tenter
21, 26, 48: roller
22: roller dryer
23: cellulose acylate film
24: winder
25: band
29: drum
29a: circumferential surface
29b: rotation axis
31: casting die
31a: outflow port
32: cast film
33: peeling roller
34: temperature controller
35: first gas supply unit
36, 40: duct
36a: duct main body
36b: nozzle
37: blower
38: controller
39: suction unit
40a: opening
42: suction machine
135: second gas supply unit
136: duct
136a: duct main body
136b: nozzle
137: blower
PC: casting position
PP: peeling position

## Claims

1. A method for producing a cellulose acylate film from a dope containing a cellulose acylate, the method comprising:
a casting step of forming a cast film by casting the dope containing the cellulose acylate having an acyl group substitution degree in a range of 2.00 or more and 3.00 or less, a sugar ester derivative, and a polyester having a weight-average molecular weight in a range of 50000 or more and 1000000 or less and represented by Formula (1) on a support; and
a peeling step of peeling the cast film from the support, 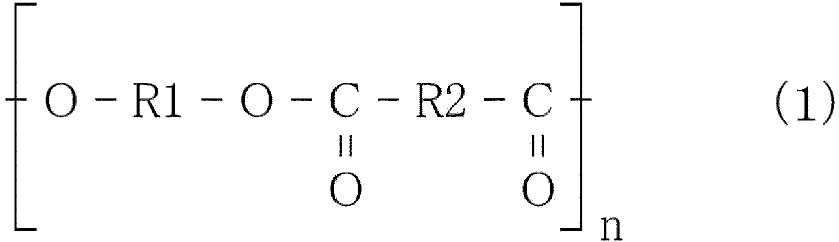 (in Formula (1), R1 and R2 are each an alkyl group and may be the same as or different from each other, and n is an integer of 1 or more).

2. The method for producing a cellulose acylate film according to claim 1,
wherein the support is a metal drum or a metal band and is provided with a temperature control mechanism, and
the temperature control mechanism adjusts temperature of a circumferential surface of the drum or a surface of the band, which is brought into contact with the dope, to a preset constant temperature.

3. The method for producing a cellulose acylate film according to claim 2,
wherein the temperature control mechanism adjusts the temperature of the circumferential surface of the drum or the surface of the band to a preset temperature of 0°C or lower.

4. The method for producing a cellulose acylate film according to any one of claims 1 to 3,
wherein the dope contains two or more types of the sugar ester derivatives and contains 2 parts by mass or more of the polyester based on a total amount of the dope.

5. The method for producing a cellulose acylate film according to any one of claims 1 to 4, further comprising:
a drying step of drying the cast film by heating and/or blowing air after peeling the cast film from the support in the peeling step.

6. The method for producing a cellulose acylate film according to claim 5,
wherein the cast film is peeled off in the peeling step in a state where an amount of residual solvent in the cast film is in a range of 50% by mass or more and 500% by mass or less based on an entire cast film, and then the cast film is dried in the drying step.

7. The method for producing a cellulose acylate film according to any one of claims 1 to 6,
wherein a cellulose acylate film having a thickness in a range of 100 µm or more and 500 µm or less is produced.

8. A cellulose acylate film comprising:
a cellulose acylate having an acyl group substitution degree in a range of 2.00 or more and 3.00 or less;
a sugar ester derivative; and
a polyester having a weight-average molecular weight in a range of 50000 or more and 1000000 or less and represented by Formula (1), 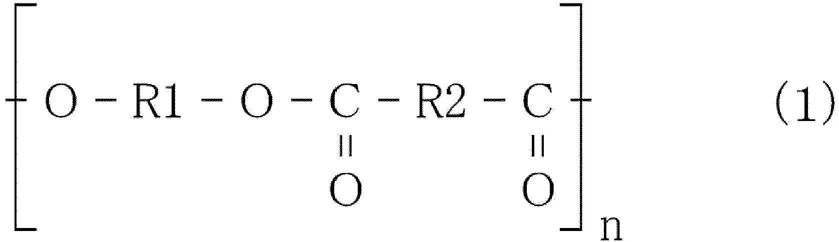 (in Formula (1), R1 and R2 are each an alkyl group and may be the same as or different from each other, and n is an integer of 1 or more).

9. The cellulose acylate film according to claim 8,
wherein the cellulose acylate film has an amount of elution of 10 mg or less per 50 cm² of the cellulose acylate film in a case of being immersed in a 10% by mass ethanol solution at 40°C for 10 days.

10. The cellulose acylate film according to claim 8 or 9,
wherein at least one of R1 or R2 in Formula (1) is a group obtained by copolymerizing two or more types of aliphatic groups which are different from each other.

11. The cellulose acylate film according to any one of claims 8 to 10,
wherein the cellulose acylate has an acyl group substitution degree in a range of 2.50 or more and 2.97 or less.

12. The cellulose acylate film according to any one of claims 8 to 11,
wherein the polyester has Mw/Mn in a range of 3 or more and 30 or less, in a case where a weight-average molecular weight is defined as Mw and a number-average molecular weight is defined as Mn.

13. The cellulose acylate film according to any one of claims 8 to 12,
wherein the cellulose acylate film contains two or more types of the sugar ester derivatives and contains 2 parts by mass or more of the polyester with respect to 100 parts by mass of the cellulose acylate.

14. The cellulose acylate film according to any one of claims 8 to 13,
wherein an amount of residual chlorine-based solvent is less than 1% by mass based on an entire cellulose acylate film.

15. The cellulose acylate film according to any one of claims 8 to 14,
wherein the cellulose acylate film has a thickness in a range of 100 µm or more and 500 µm or less.
